# EUROPEAN PATENT APPLICATION

(11) **EP 4 685 516 A1**
(43) Date of publication of application: **28.01.2026**
(21) Application number: 25190480.1
(22) Date of filing: 18.07.2025
(51) Int. Cl.: G01S 7/40, G01S 13/86, G01S 13/931

(54) **SYSTEM AND METHOD FOR DIMENSIONAL CONTROL OF VEHICULAR SYSTEMS ON A WORKING VEHICLE AND A RELATED WORKING VEHICLE**

(30) Priority: 24.07.2024 IT 202400017182
(71) Applicant: IVECO S.P.A., 10156 Torino (IT)
(72) Inventor: KOULAS, Theodoros, 10156 Torino (IT)
(74) Representative: Studio Torta S.p.A.

(57) **Abstract**

System (10) for dimensional control of a vehicular system (3) of a working vehicle (2); the vehicular system (3) comprises a sensory system (4) configured to output data for assisting a driver in driving the working vehicle (2). The system (10) comprises electronic processing resources configured to: acquire and process (20-24) the data outputted by the sensory system (4) to determine the occurrence of possible misalignments in the sensory system (4) and the design capability of the sensory system (4) of the vehicular system (3); determine (23-25) optimization parameters relative to an optimized design of the sensory system (4) based on the data outputted by the sensory system (4), the occurrence of possible misalignments in the sensory system (4) and the design capability of the sensory system (4); and output (26) a report indicative of the optimization and the calibration capability of the sensory system (4) of the vehicular system (3) for implementing any optimization of said sensory system (4) based on the optimization parameters, the occurrence of possible misalignments in the sensory system (4) and the design capability of the sensory system (4) .

## Description

### CROSS-REFERENCE TO RELATED APPLICATIONS

This patent application claims priority from Italian patent application no. 102024000017182 filed on July 24, 2024, the entire disclosure of which is incorporated herein by reference.

### TECHNICAL FIELD

The present invention concerns systems and methods for dimensional control of vehicular systems, in particular advanced-driver assistance systems, ADAS, on a working vehicle or ego vehicle and a working vehicle therein.

The present invention finds its preferred, although not exclusive, application in a vehicle provided with wheels and/or tracks, more, in particular, working land vehicles, such as agricultural vehicles, *e.g.* tractors. Reference will be made to this application by way of example below.

### BACKGROUND OF THE INVENTION

As is known, current working vehicles have been provided with ADAS, which is an integral part of a vehicle platform. To realize various functions, the ADAS architecture encompasses the installation of sensors, such as radars, cameras, and the like, to improve active safety (namely, to minimize fatal accidents), fuel consumption (especially for commercial vehicles) and the driving experience of working vehicle drivers.

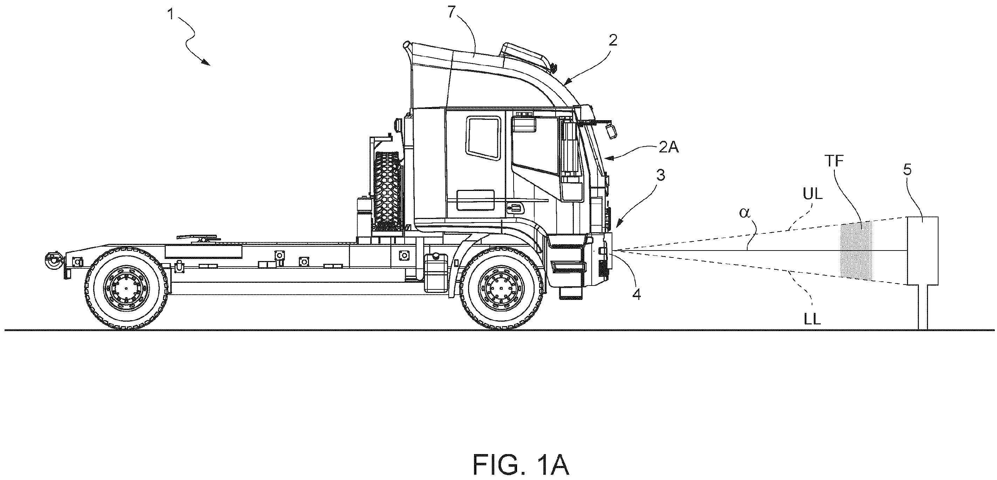

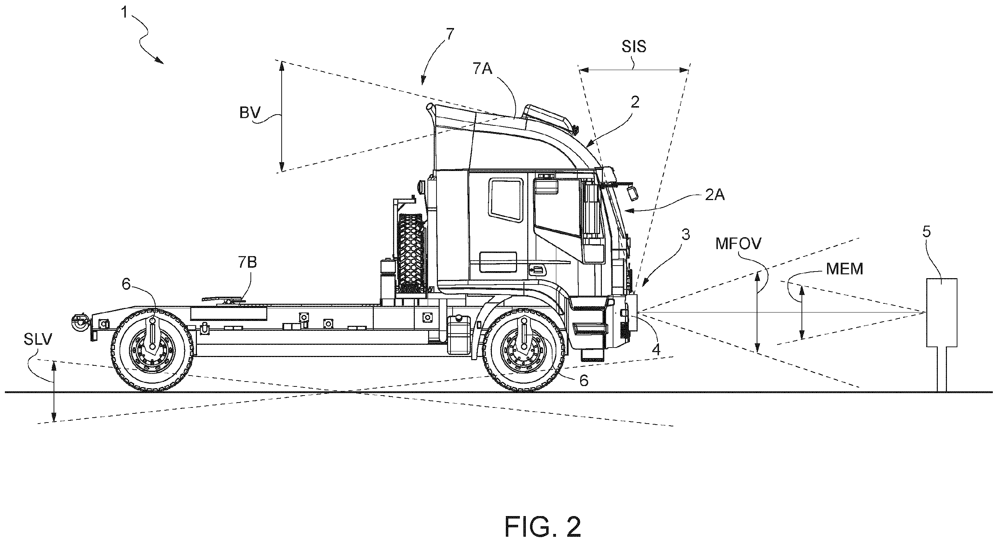

Figures 1A-1B and 2` exemplarily show a known End-of-Line, EOL, set-up and measurement system 1 applied to a working vehicle, here a tractor, 2 (also referred to as ego vehicle hereinafter) comprising an ADAS 3, here comprising a sensory system 4, here a radar positioned at the front part 2A of the working vehicle 2, referred hereinafter as ego vehicle 2; it is noted that the sensory system 4 of the ADAS 3 may comprise more than one sensor, *i.e.* more than the radar, to implement different functions for the working vehicle 2, for instance further radars and camera(s). The system 1 comprises an EOL station 5 located in front of the ego vehicle 2 *(i.e.* in front of the front part 2A) and configured to register the real position of the sensory system 4 on the structure of the ego vehicle 2 with a high precision. It is noted that the dimensional variability and the position of the same sensory system 4 are evaluated. In this case, the EOL station 5 comprises a target, *i.e.* a Doppler generator, configured to evaluate the installation of the same sensory system 4, in particular by verifying at least the following quantities related to the sensory system 4:
- expected angles α and β related to the position of the sensory system 4 on the ego vehicle 2 to secure high performance of the related functions, *e.g.* detect a moving object at an expected range for example moving vehicle in front of the ego vehicle 2, and activate a designated function; and
- an upper and a lower limit UL, LL of a sensing range of the sensory system 4 and, consequently, the related acceptable tolerance field TF, the latter defined as the range between the limits UL, LL.

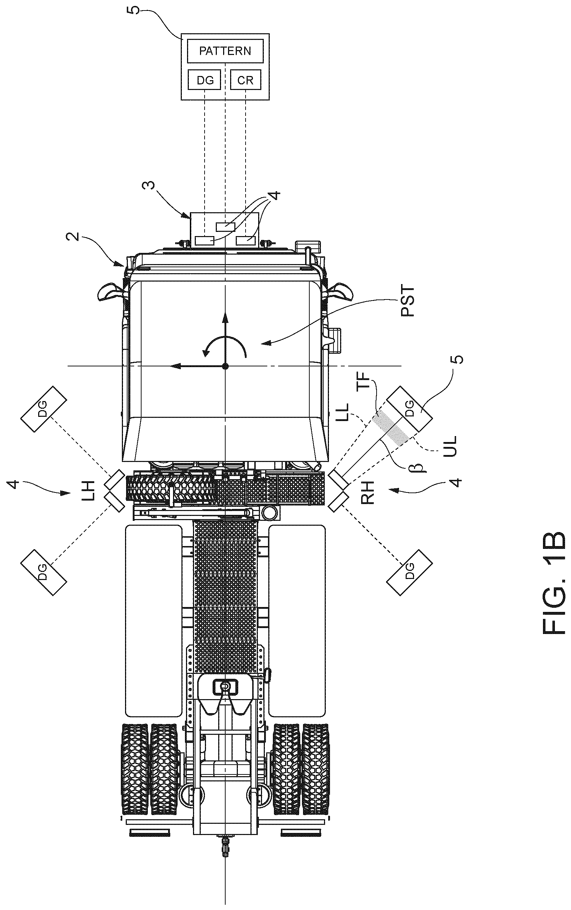

In some cases, the EOL station 5 comprises further target types and settings, depending on the type of sensor to be monitored and the position thereof. For instance, in Figure 1B, the EOL station 5 comprises a pattern target type for monitoring a camera of the sensory system 4, the doppler generator, DG, and a corner reflector, CR, and it may further include a flat plate FP. In addition, it is noted that the calibration of each sensor of the sensory system 4 usually takes place sequentially and involves different types of calibration, for instance of the yaw angle instead of the pitch and vice versa.

In further detail, Figure 1A illustrates a side view of a typical EOL station 5, whereas Figure 1B illustrates a top view of the same typical EOL station 5. Specifically, the EOL station 5 is arranged in proximity of the ego vehicle 2, namely around it, and is configured to determine and evaluate the installation of the sensory system 4 of the same ego vehicle 2, in particular by verifying the following quantities: an angular Pitch variation PV, here represented by angle α, of the sensory system 4, in particular of a frontal radar of the latter; a positioning accuracy PST, in particular a distance and yaw of the frontal radar to the target, here the Doppler generator of the EOL station 5, of the ego vehicle 2; an angular Yaw variation YV, here represented by angle β, of the sensory system 4, in particular of side radars of the latter; and a positioning accuracy PST, in particular a distance and yaw of the -side radars to the target, here the Doppler generator of the EOL station 5, of the ego vehicle 2.

In addition, the EOL station 5 is configured to determine and evaluate the installation of the sensory system 4 of the same ego vehicle 2, in particular by estimating a roll variation of the said sensory system 4, not shown in Figures 1A and 1B.

As is also known, sensory systems, like the sensory system 4, require a robust installation against dimensional variation to ensure high performance of functions and effective assistance to the driver of the ego vehicle 2. In particular, the Applicant has noted that the implementation of increasingly complex functions *(e.g.* implementation of moving-off information system, MOIS, and blind spot information system, BSIS) dictates the necessity for higher dimensional control for said sensory systems and, more in general, of ADAS; more specifically, the dimensional control and the determination of the dimensional variation contributors are of greater importance in current years.

Due to cost constraints, said sensory systems are primarily carried over from passenger cars with lesser permissible assembly variability, thereby rendering the issue related to dimensional variation more apparent. The issue becomes critical in cases of commercial vehicle applications such as, for example, ego vehicles like ego vehicle 2.

The Applicant has noted that the strict dimensional control for sensory systems and, in general, ADAS gives rise at least to the following problems:
A) technical risk: as is known, the sensory systems are provided with related sensor integration guidelines that define the permissible misalignment limits related to the functionality of the same. The function of a sensory system is impaired or deteriorated when the abovementioned misalignment limits are exceeded or not fulfilled. Consequently, the installation location of the sensory system in the considered ego vehicle is critical when taking into consideration the body and suspension loading variation of the ego vehicle;
B) EOL calibration: the sensory system of an ADAS shall pass the end-of-line calibration in the plant, meaning that the sensory system shall operate in in-factory loading conditions (*i.e.* with one driver, with the working vehicle having an empty tank of fuel, at nominal pressure and in static condition). In case of excessive misalignment of the same sensory system, the calibration process of the same sensory system will most likely fail, thereby triggering a root cause analysis and a potential re-work on the ego vehicle; and
C) Financial impact: the strict dimensional control in conjunction with the plethora of vehicle variant builds (which is a typical occurrence for commercial vehicles) determines an increasing need to purchase additional metrology equipment, consequently increasing the calibration takt timing and complexity.

Referring to Figure 2, the Applicant has noted that the following misalignment contributors concur in a not robust installation of the sensory system 4:
- a suspension load variation SLV, *i.e.* a variation caused by the load applied to the suspension 6 of the ego vehicle 2;
- a body variation BV, *i.e.* typical variation from suspension rigid fixed points on the body 7, the latter comprising a cabin 7A and a chassis 7B, to the sensory system 4's fixing points of the ego vehicle 2;

- internal squint SIS of the sensory system 4; and
- a misalignment MEM of the FoV of the EOL station 5, i.e. of the doppler generator.

In further detail, squint variation or internal squint SIS of the sensory system 4 is defined as the intrinsic tolerance of the sensor vision of the sensory system 4 caused due to assembly imperfections on a component level. For instance, an x° angular variation of an antenna assembly on a PCB (Printed Circuit Board) of a radar of the sensory system 4 will cause an x° angular variation of the vision on a vehicle level.

Furthermore, the misalignment MFOV is defined as the total variation of the vehicle system of the ego vehicle 2, i.e. the sum of the body variation BV (*i.e*. chassis and cabin variation combined), the internal squint of the sensory system 4 and the suspension loading variation SLV of the working vehicle 2.

In addition, referring to the misalignment MEM, the Doppler Generator of the EOL station 5 is defined as "FoV coverage zone". Specifically, a Doppler generator and other target types (such as flat plates, corner reflectors, and the like) are a part of a calibration bench, meaning that any position variation of the targets is counted as measurement error. In other words, such misalignment MEM affects the overall performance of the working vehicle 2 indirectly; for instance, significant measurement errors will cause ambiguous calibration results, thereby deteriorating the real-life performance of the sensory system 4. Given that Figures 1 and 2 only refer to the radar 4, similar discussions may be made for any component of the sensory system 4 of the ego vehicle 2, each being affected by respective issues in terms of installation, dimensional control, and the like.

Therefore, the need is felt to implement a concise methodology for dimensional control, both statistically and arithmetically, to at least in part mitigate any technical risk, by helping a design engineer to choose more effectively a proper installation location for the sensory system of an ADAS. It is also felt the need to achieve cost savings by eliminating complex measurement processes and tool investments.

The present invention aims to satisfy the abovementioned needs in a cost-effective and optimized manner.

### SUMMARY OF THE INVENTION

The aforementioned aim is reached by a system and a method for dimensional control of vehicular systems, namely to manage the dimensional variation of vehicular systems, in particular ADAS, of a working or ego vehicle and a related working vehicle therein as claimed in the appended set of claims that are an integral part of the present description.

### BRIEF DESCRIPTION OF DRAWINGS

For a better understanding of the present invention, a preferred embodiment is described in the following, by way of a non-limiting example, with reference to the attached drawings wherein:
- Figures 1A and 1B schematically show a side and top view respectively of a known EOL set-up and measurement system;
- Figure 2 schematically shows a known EOL set-up and measurement system with possible contributors to the misalignment of a sensory system of an ego vehicle;
- Figure 3 schematically shows a system for dimensional control of a vehicular system of an ego vehicle according to an embodiment of the present invention;
- Figure 4 schematically shows a flowchart of a method for dimensional control of a vehicular system of an ego vehicle according to an embodiment of the present invention;
- Figure 5 schematically shows a flowchart of a Defect per Million, DPM, calculator of the method for dimensional control of a vehicular system of the ego vehicle depicted in Figure 4; and
- Figure 6 schematically shows a flowchart of a statistical analysis of a vehicular system of the method for dimensional control of a vehicular system of an ego vehicle depicted in Figure 4.

### DETAILED DESCRIPTION OF THE INVENTION

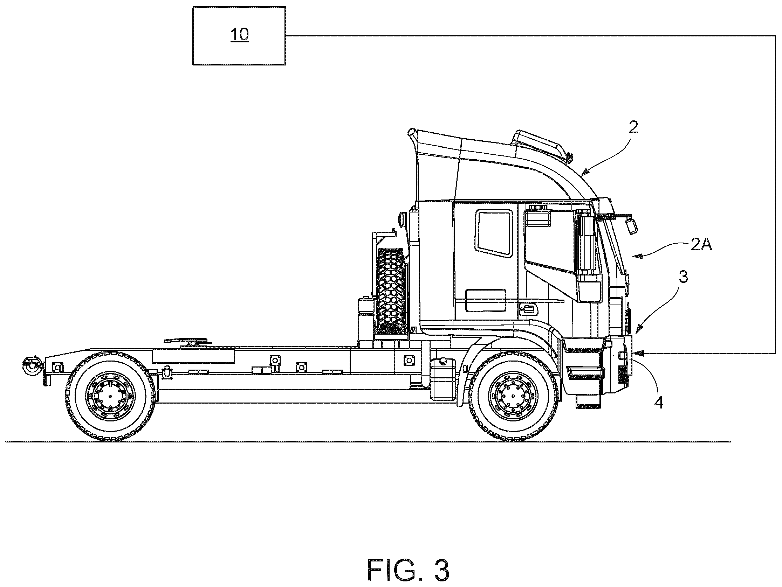

As better described in the following paragraphs with reference to Figures 3-6, the present invention relates to a system and a method implementing both a dedicated tolerance stack-up methodology and a further methodology that processes statistically and arithmetically the dimensional contributors whose variation is critical for the performance and the calibration procedures of sensory systems of an ADAS provided on an ego vehicle; to allow a better understanding of the present invention, in the following, reference to an ego vehicle like the one shown in Figures 1 and 2 is made, without it being limiting to the present invention, and, thus, the same reference numbers are used.

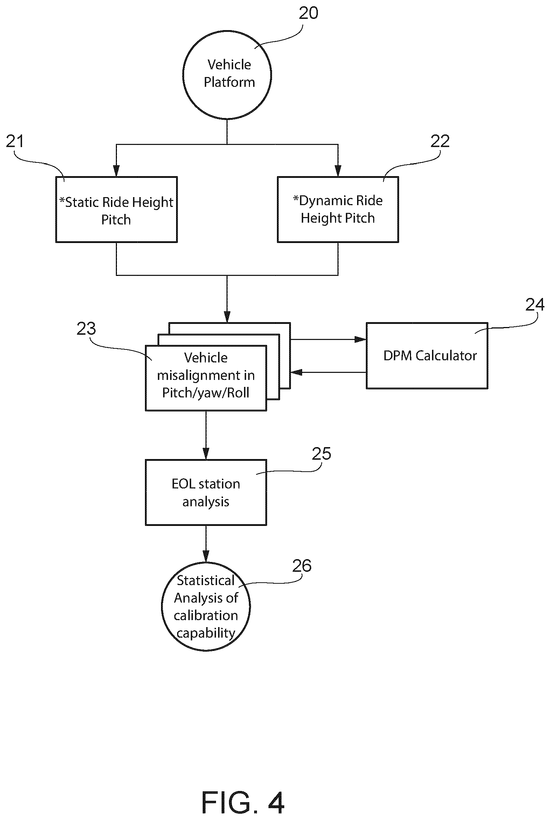

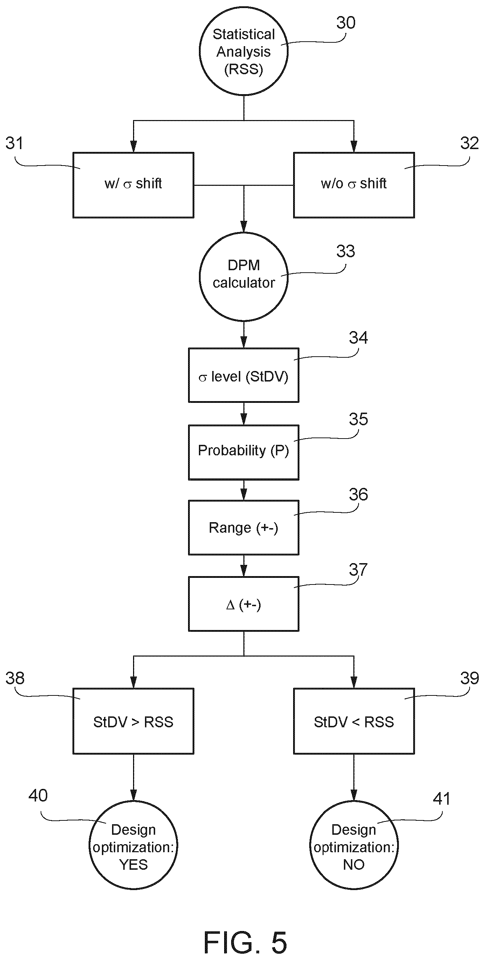

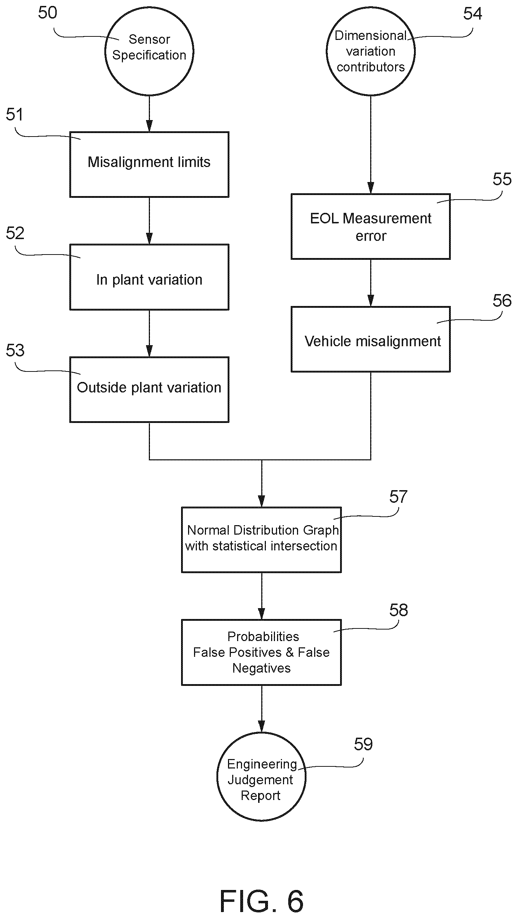

The Applicant furthermore notes that, as better described in the following paragraphs, the present invention concerns a tolerance stack-up methodology that incorporates at least the following elements:
- a sequential parametric calculation of each step according to a defined flow chart, shown in Figure 4;
- a DPM calculator for analyzing a selected design capability, *i.e.* optimize an angular design variation to achieve a desired production yield, measured in defects per million (DPM) , for a sensory system of the working vehicle, shown in Figure 5; and
- an integrated normal distribution graph for calculating the statistical intersection between the vehicle system variation *(i.e.* the variation related to the sensory system 4) of the ego vehicle 2 and the error caused by the measurement system, here an EOL bench like the one shown in Figure 6.

As it will be disclosed in further detail in the following paragraphs, the tolerance stack-up methodology, according to the present invention, considers the dimensional variation contributors of the ADAS sensory system installed on an ego vehicle, thereby allowing to evaluate if the tolerances of the said ADAS fulfill the misalignment limits. Moreover, the methodology anticipates whether a dimensional optimization is required. In other words, the present invention incorporates a tolerance stack-up methodology which allows to:
- assess the magnitude of risk by estimating the number of defects during EOL calibration for each ADAS sensor separately;
- assign installation tolerance values to each ADAS sensor; and
- determine how each sensor is going to be integrated, *i.e.* define a dimensional assembly goal for each ADAS sensor installation onto the ego vehicle.

Therefore, the method according to the present invention aims at combining a theoretical and statistical approach to evaluate the dimensions and design of the sensory system of the ADAS.

According to an aspect of the present invention, the abovementioned tolerance stack-up methodology is implemented as a one-dimensional tolerance stack-up tool, namely a calculation sheet; exemplarily, the calculation sheet is implemented through *e.g.* commercial software for generating a calculation sheet, *e.g.* Microsoft ^{®} Excel.

Figure 3 schematically shows a system 10 for dimensional control of a vehicular system, here the ADAS 3, of the ego vehicle 2; in particular, the ADAS 3 here comprises a sensory system 4, *i.e.* a system including a number of sensors, for example a radar positioned in the front portion 2A of the ego vehicle 2, configured to output data for assisting a driver in driving the ego vehicle 2. As it will be clear from the disclosure below, the term "dimensional control" refer not only to controlling the dimensions of the sensors or component of the sensory system 4 but also evaluating the design of the same sensory system 4, *i.e.* a full dimensional control of the same sensory system 4.

In particular, referring to both Figures 3 and 4, the system 10 comprises electronic processing resources (not shown) configured to:
- acquire and process (blocks 20-24) the data outputted by the sensory system 4 to determine an occurrence of possible misalignments in the sensory system 4 and design capability of the sensory system 4 of the ADAS 3;
- determine (blocks 23-25) optimization parameters relative to an optimized design of the sensory system 4 based on the data outputted by the sensory system 4, the occurrence of possible misalignments in the sensory system 4 and the design capability of the sensory system 4; and
- output (block 26) a report indicative of the optimization and the calibration capabilities of the sensory system 4 of the ADAS 3 based on the optimization parameters, the occurrence of possible misalignments in the sensory system 4 and the design capability of the sensory system 4.

In particular, the abovementioned report details the following:
- recommendations for optimizing the sensory system 4 on specific input parameters;
- information on the detection of possible misalignments within the sensory system 4; and
- information on the design variation capabilities of sensory system 4.

In this way, as it will be more clear from the following, the abovementioned report represents a comprehensive assessment for users that will provide insights for improving the performance and accuracy of sensory system 4.

In particular, according to an aspect of the present invention, the electronic processing resources are of a local type, *e.g.* they are implemented as a local unit; according to a further and alternative aspect of the present invention, electronic processing resources are of a distributed type, *e.g.,* on nodes in a network, and implementing paradigms such as cloud computing. Without limiting to the present invention, the electronic processing resources are hereinafter of the local type.

Referring to Figure 5, the system 10 is configured to acquire and process (blocks 20-24) the data outputted by the sensory system 4 by:
- determining (blocks 30-32) a tolerance value, here a root sum square, RSS, relating to the design of the sensory system 4 and, thus, referred hereinafter as RSS, relating to the design of the sensory system 4;
- verifying (block 33-39) that the tolerance value RSS fulfills a proprietary criterion based on a dimensional variation value, here a standard deviation determined based on the data outputted by the sensory system 4 and, thus, referred hereinafter as StDv;
- if the tolerance value RSS fulfills the proprietary criterion, determining (block 41) that the design of the sensory system 4 is determined, in particular anticipated, to meet the design criteria; and
- if the tolerance value RSS does not fulfill the proprietary criterion, determining (block 40) that the design of the sensory system 4 is determined to not meet the design criteria and, thus, needs to be optimized based on one or more optimization parameters, by controlling or improving respective dimensional variation contributors.

In particular, the dimensional variation contributors are parameters used for designing the sensory system 4, in particular of at least one sensor thereof; by tuning the abovementioned dimensional variation contributors, it is possible to modify the design of the sensory system 4 and, thus, achieve the abovementioned objectives.

According to an aspect of the present invention, the system 10 is furthermore configured to determine the tolerance value RSS based on at least one between values of design tolerances of the sensory system 4 and values of measurements relating to the suspension loading variation of the working vehicle 2; in particular, the Applicant has noted that, if the inputs of tolerance stack-up method are analyzed and designated properly, *i.e.* each designated value represents a three sigma standard deviation, the resulting tolerance value RSS outputs a displacement or a rotation of the position of the sensory system 4. Specifically, it is noted that the tolerance value RSS is determined to be the outcome of the tolerance stack-up method according to the present invention derived by the analysis of both design tolerances *(i.e.* individual component tolerances from engineering drawings) and actual measurements *(e.g.* suspension loading variation); according to an aspect of the present invention, the tolerance value RSS represents a three-sigma dispersion, more in particular, a Gaussian distribution, with the assumption of a robust manufacturing process and sensors of the sensory system 4 whose dimensional values are within the provided specifications (*i.e*. permissible angular misalignment limits provided by the sensors' manufacturer).

According to a further aspect of the present invention, the system 10 is configured to acquire and process (blocks 20-24) the data outputted by the sensory system 4 by determining at least the following statistical quantities based on the dimensional variation value StDv (block 34) and the data outputted by the sensory system 4:
- a probability value P (block 35) related to the data outputted by the sensory system 4 indicative of the defect rate probabilities *(i.e.* probability of measurements to be out of the specification boundaries) related to the sensory system 4;
- a range value R (block 36) of the values derived from the data outputted by the sensory system 4 indicative of the total angular variation *(i.e.* sum of maximum and minimum measured and estimated misalignment) related to the sensory system 4; and
- a delta value Δ (block 37) derived from the data outputted by the sensory system 4 indicative of the dimensional difference between the tolerance value RSS determined according to the method described above and a further statistical quantity, specifically a calculated sigma level, the latter being derived from the defects per million method described above with reference to Figure 5.

Furthermore, the system 10 is configured to verify (blocks 33-39) that the tolerance value RSS fulfils a proprietary criterion based on a dimensional variation value StDv also based on at least one among the probability value P, the range value R and the delta value Δ.

According to an aspect of the present invention, the system 10 is configured to acquire and process (blocks 20-24) the data outputted by the sensory system 4 by determining the tolerance value RSS also based on a further statistical value (block 31-32), here a sigma shift, representing a variation of the dimensions of the sensory system 4. In particular, when the abovementioned sigma shift is not considered, the dimensional variation of the sensory system 4 is represented by the tolerance value RSS, *i.e.* the abovementioned three-sigma variation; on the other hand, when considered, the dimensional variation of the sensory system 4 will be considered to be affected by several factors; namely, the Applicant has noted that a value of 1,5 for the sigma shift represents a long-term process assuming tools amortization, materials variability, machines wear and tear, measurement system variability and the like.

Furthermore, the system 10 is also configured to acquire and process (blocks 20-24) the data outputted by the sensory system 4 to determine the occurrence of possible misalignments in the sensory system 4 and the design capability of the sensory system 4 of the ADAS 3 also based on values relating to a static and dynamic ride height pitch (blocks 21-22).

Furthermore, referring to Figure 6, the system 10 is further configured to acquire and process (blocks 20-25) the data outputted by the sensory system 4 by:
- acquiring (blocks 50-53) data relative to specifications of the sensory system 4, the data comprising data relative to misalignment limits of the sensory system 4, to in-plant variation values and outside-plant variation values of the measurements of the sensory system 4;
- acquiring (blocks 54-56) data relative to dimensional variation contributors of the sensory system 4 determined based on the measurement data relative to possible misalignments in the sensory system 4 of the ADAS 3;
- processing (blocks 57-58) the data relative to specifications and the data relative to dimensional variation contributors of the sensory system 4 to determine a corresponding statistical distribution and corresponding probabilities; and
- outputting (block 59) a report based on the corresponding statistical distribution and the corresponding probabilities.

In particular, the data relative to dimensional variation contributors are also based on an error caused by the measurement system, here the EOL station 5, and an error caused by a vehicle positioning accuracy of the ego vehicle 2 against the EOL station 5.

It is noted that the term "in-plant variation values" refer to values of the abovementioned data related to the sensory system 4 which are determined in the following conditions:
- one driver driving the working vehicle 2;
- empty fuel reservoir of the working vehicle;
- nominal pressure of the tires of the working vehicle 2;
- static condition of the ego vehicle 2, *i.e.* the ego vehicle 2 standing against the targets; and
- chassis and cabin suspensions set nominal when equipped with pneumatic suspension.

Furthermore, it is also noted that outside plant variation refers to the term "outside plant variation values" refers to values of the abovementioned data related to the sensory system 4 which are determined in the following conditions:
- real-life loading conditions, *i.e.* the ego vehicle 2 is subject to various loading conditions, such as different number of passengers, loaded cargo area, et *cetera*;
- maximum loading condition, *i.e.* the maximum load that can be transported by the working vehicle 2 during normal operation of the latter; and
- various dynamic conditions, such as maximum acceleration and deceleration with different loading conditions.

Therefore, to summarize, the method disclosed above with reference to Figures 3-6 substantially comprise the following steps:
- a theoretical analysis, in particular by calculating the tolerance value RSS, representing a three-sigma variation which is calculated separately for each angular variation (specifically, pitch, yaw, and roll) of the sensor system 4;
- a DPM calculator used to define a design/process optimization based on the RSS theoretical analysis, namely based on the required number of defects; and
- when the optimization is defined, *i.e.* by determining if dimensions or processes have to be optimized, the optimized variation of said dimensions or process of the sensory system 4 will be an integral part of the EOL calibration procedures for determining the production yield and the fail/pass criteria.

In view of the foregoing, the advantages of the present system, method, and related ego vehicle according to the invention are apparent.

In particular, the present system and method allow to evaluate the design capability, as well as the calibration capability, of the sensory system 4 of the ego vehicle 2 so as to determine if an optimization of the same design has to be implemented, *i.e.* if a dimensional control has to be implemented to avoid *e.g.* unsuccessful calibration or the like.

It is noted that the present invention may be advantageously used at least for the following applications:
- alignment and orientation of the sensory system when mounted on a vehicle, in particular an ego vehicle;
- statistical interpretation of angular variability, *i.e.* Field of View, FoV, of the sensory system;
- integration of specific vehicular system vision technology in the present method, meaning that each element of the sensory system (*e.g.,* cameras, radars, and the like) will be considered when applying the present invention *(i.e.* dimensional contributions regarding optics and radio detection in the considered example) and thereby providing an evaluation of the dimensions and positioning of the sensory system on the ego vehicle.

It is furthermore noted that the present method can be implemented so that each calculation step is not implemented in a parametrized way, for example by performing each calculation step in different sub-programs. Furthermore, each calculation step may be implemented by means of different commercial programs, such as Mathworks^{®} Matlab, Minitab e Microsoft^{®} Office Excel. In addition, defined flows for data gathering of the present method can be re-ordered or some steps can be eliminated depending on the calculation steps necessary for the analysis to be carried out.

In addition, as stated above, the present method is preferably implemented in a one-dimensional sheet of Microsoft^{®} Office Excel, whose accuracy of the results depends on specific assumptions *(e.g.* robust process control, tolerances within the specifications of the sensory system, and the like). With the ever-increasing complexity of implemented functions, together with an anticipated increase of elements of the sensory system to be installed on the ego vehicle (for example, by installing twice as many elements of the sensory system), the present invention provides means and methods to help in setting well-defined integration processes with mathematical equations implemented and tailored to each specific need of the elements of the sensory system.

It is clear that modifications can be made to the described system, method, and related working vehicle which do not extend beyond the scope of protection defined by the claims.

For example, some of the abovementioned steps may be eliminated or performed in a different order based on the desired objective.

Furthermore, the present system and the related method may be modified so as to extend the disclosed methodology and tools to calculate a statistical variation of actual production logs. In addition, the present system and method may be modified so as to enable real-time comparison of tolerance stack-up results with the actual statistical spread of manufacturing. Additionally, the present system and method may be modified to incorporate the abovementioned sigma shift into the actual production spread to estimate long-term variation. It is noted that, according to further embodiments of the present invention, the sigma shift can be applied in various increments, rather than the standard 1.5 shift.

Moreover, the present system and method can be modified by incorporating, except the above described RSS method, different commonly used statistical methodologies, such as Root Mean Square, Orthogonal, and Sample Method *(e.g.* Monte Carlo).

## Claims

1. System (10) for dimensional control of a vehicular system (3) of a working vehicle (2); the vehicular system (3) comprises a sensory system (4) configured to output data for assisting a driver in driving the working vehicle (2),
the system (10) comprises electronic processing resources configured to:
- acquire and process (20-24) the data outputted by the sensory system (4) to determine the occurrence of possible misalignments in the sensory system (4) and the design capability of the sensory system (4) of the vehicular system (3);
- determine (23-25) optimization parameters relative to an optimized design of the sensory system (4) based on the data outputted by the sensory system (4), the occurrence of possible misalignments in the sensory system (4) and the design capability of the sensory system (4); and
- output (26) a report indicative of the optimization and the calibration capabilities of the sensory system (4) of the vehicular system (3) based on the optimization parameters, the occurrence of possible misalignments in the sensory system (4) and the design capability of the sensory system (4).

2. The system (10) according to claim 1, wherein the system is configured to acquire and process (20-24) the data outputted by the sensory system (4) by:
- determining (30-32) a tolerance value (RSS) relating to the design of the sensory system (4);
- verifying (33-39) that the tolerance value (RSS) fulfills a proprietary criterion based on a dimensional variation value (StDv);
- if the tolerance value (RSS) fulfills the proprietary criterion, determining (41) that the design of the sensory system (4) is determined to meet design criteria; and
- if the tolerance value (RSS) does not fulfill the proprietary criterion, determining (40) that the design of the sensory system (4) is determined to not meet the design criteria.

3. The system (10) according to claim 2, wherein the tolerance value (RSS) is a root sum square relating to the design of the sensory system (4) and the dimensional variation value (StDv) is a standard deviation (StDv) determined based on the data outputted by the sensory system (4) .

4. The system (10) according to claim 3 and further configured to determine the tolerance value (RSS) based on at least one between values of design tolerances of the sensory system (4) and values of measurements relating to the suspension loading variation of the working vehicle (2).

5. The system (10) according to any one of claims 2-4 and further configured to acquire and process (20-24) the data outputted by the sensory system (4) by determining at least the following statistical quantities based on the dimensional variation value (StDv) and the data outputted by the sensory system (4):
- a probability value (P) related to the data outputted by the sensory system (4) indicative of defect rate probabilities related to the sensory system (4);
- a range value (R) of the values derived from the data outputted by the sensory system (4) indicative of a total angular variation related to the sensory system (4); and
- a delta value (Δ) derived from the data outputted by the sensory system (4) indicative of a dimensional difference between the tolerance value (RSS) and a further statistical quantity,
and wherein the system (10) is configured to verify (33-39) that the tolerance value (RSS) fulfills a proprietary criterion based on a dimensional variation value (StDv) also based on at least one among the probability value (P), the range value (R) and the delta value (Δ).

6. The system (10) according to any one of the preceding claims and further configured to acquire and process (20-25) the data outputted by the sensory system (4) by:
- acquiring (50-53) data relative to specifications of the sensory system (4), said data comprising data relative to misalignment limits of the sensory system (4), to in-plant variation values and outside plant variation values of the measurements of the sensory system (4);
- acquiring (54-56) data relative to dimensional variation contributors of the sensory system (4) determined based on the measurement data relative to possible misalignments in the sensory system (4) of the vehicular system (3);
- processing (57-58) the data relative to specifications and the data relative to dimensional variation contributors of the sensory system (4) to determine a corresponding statistical distribution and corresponding probabilities; and
- outputting (59) a report based on the corresponding statistical distribution and the corresponding probabilities,
wherein the data relative to dimensional variation contributors is also based on an error caused by a measurement system and an error caused by a vehicle positioning accuracy of the working vehicle (2) against the measurement system.

7. The system (10) according to any one of the preceding claims and further configured to acquire and process (20-24) the data outputted by the sensory system (4) to determine the occurrence of possible misalignments in the sensory system (4) and the design capability of the sensory system (4) of the vehicular system (3) also based on values relating to a static and dynamic ride height pitch (21-22).

8. Method for dimensional control of a vehicular system (3) of a working vehicle (2); the vehicular system (3) comprises a sensory system configured to output data for assisting a driver in driving the working vehicle (2),
the method comprises the steps of:
- acquiring and processing (20-24) the data outputted by the sensory system (4) to determine the occurrence of possible misalignments in the sensory system (4) and the design capability of the sensory system (4) of the vehicular system (3);
- determining (23-25) optimization parameters relative to an optimized design of the sensory system (4) based on the data outputted by the sensory system (4), the occurrence of possible misalignments in the sensory system (4) and the design capability of the sensory system (4); and
- outputting (26) a report indicative of the optimization and the calibration capabilities of the sensory system (4) of the vehicular system (3) based on the optimization parameters, the occurrence of possible misalignments in the sensory system (4) and the design capability of the sensory system (4).

9. The method according to claim 8, wherein the step of acquiring and processing (20-24) the data outputted by the sensory system (4) comprises the steps of:
- determining (30-32) a tolerance value (RSS) relating to the design of the sensory system (4);
- verifying (33-39) that the tolerance value (RSS) fulfills a proprietary criterion based on a dimensional variation value (StDv);
- if the tolerance value (RSS) fulfills the proprietary criterion, determining (41) that the design of the sensory system (4) is determined to meet design criteria; and
- if the tolerance value (RSS) does not fulfill the proprietary criterion, determining (40) that the design of the sensory system (4) is determined to not meet the design criteria.

10. The method according to claim 9, wherein the step of determining (30-32) a tolerance value (RSS) comprises determining the tolerance value based on at least one between values of design tolerances of the sensory system (4) and values of measurements relating to the suspension loading variation of the working vehicle (2).

11. The method according to any one of claims 9-10, wherein the step of acquiring and processing (20-24) the data outputted by the sensory system (4) comprises determining at least the following statistical quantities based on the dimensional variation value (StDv) and the data outputted by the sensory system (4):
- a probability value (P) related to the data outputted by the sensory system (4) indicative of defect rate probabilities related to the sensory system (4);
- a range value (R) of the values derived from the data outputted by the sensory system (4) indicative of a total angular variation related to the sensory system (4); and
- a delta value (Δ) derived from the data outputted by the sensory system (4) indicative of a dimensional difference between the tolerance value (RSS) and a further statistical quantity,
and wherein the method further comprises the step of verifying (33-39) that the tolerance value (RSS) fulfills a proprietary criterion based on a dimensional variation value (StDv) also based on at least one among the probability value (P), the range value (R) and the delta value (Δ).

12. The method according to any one of claims 8-11, wherein the step of acquiring and processing (20-25) the data outputted by the sensory system (4) comprises the steps of:
- acquiring (50-53) data relative to specifications of the sensory system (4), said data comprising data relative to misalignment limits of the sensory system (4), to in-plant variation values and outside plant variation values of the measurements of the sensory system (4);
- acquiring (54-56) data relative to dimensional variation contributors of the sensory system (4) determined based on the measurement data relative to possible misalignments in the sensory system (4) of the vehicular system (3);
- processing (57-58) the data relative to specifications and the data relative to dimensional variation contributors of the sensory system (4) to determine a corresponding statistical distribution and corresponding probabilities; and
- outputting (59) a report based on the corresponding statistical distribution and the corresponding probabilities,
wherein the data relative to dimensional variation contributors is also based on an error caused by a measurement system and an error caused by a vehicle positioning accuracy of the working vehicle (2) against the measurement system.

13. Working vehicle (2) comprising a vehicular system (3), the vehicular system (3) comprises a sensory system (4) configured to output data for assisting a driver in driving the working vehicle (2); the vehicular system (3) is configured to be dimensionally controlled by a system (10) for dimensional control of a vehicular system (3) of a working vehicle (2) according to any one of claims 1-7; the system (10) being configured to carry out the method according to any one of claims 8-12.
